# EUROPÄISCHE PATENTSCHRIFT

(11) **EP 1 315 629 B1**
(45) Veröffentlichungstag und Bekanntmachung des Hinweises auf die Patenterteilung: **24.03.2004**
(21) Anmeldenummer: 02764735.3
(22) Anmeldetag: 19.07.2002
(51) Int. Cl.: B60J 7/20, H01Q 1/32

(54) **PLATTE IN EINEM KRAFTFAHRZEUG MIT EINEM METALLISCHEN TRAGKÖRPER**
PLATE IN A MOTOR VEHICLE WITH A METAL SUPPORT BODY
PLAQUE MUNIE D'UN CORPS SUPPORT METALLIQUE POUR VEHICULE A MOTEUR

(30) Priorität: 24.07.2001 DE 10135223
(43) Veröffentlichungstag der Anmeldung: 04.06.2003
(73) Patentinhaber: DaimlerChrysler AG, 70567 Stuttgart (DE); CTS Fahrzeug-Dachsysteme GmbH, 21079 Hamburg (DE)
(72) Erfinder: KOCH, Michael, 71063 Sindelfingen (DE); FUCHS, Corinna, 71642 Ludwigsburg (DE)
(74) Vertreter: Müller, Gottfried
(86) Internationale Anmeldenummer: PCT/EP2002/008081
(87) Internationale Veröffentlichungsnummer: WO 2003/010021

(56) Entgegenhaltungen:
- DE-A- 4 403 643
- DE-A- 4 446 483
- DE-A- 10 025 130
- DE-C- 19 928 213

## Beschreibung

Die Erfindung bezieht sich auf eine Platte in einem Kraftfahrzeug mit einem metallischen Tragkörper nach dem, in DE 4446483 A1 offenbarten Oberbegriff des Anspruches 1.

Aus der Druckschrift DE 44 46 483 A1 ist eine Abdeckung für einen Verdeckkasten zur Aufnahme eines verstellbaren Fahrzeugdaches bekannt, welches zwischen einer einen Fahrzeuginnenraum überdeckenden Schließstellung und einer den Innenraum freigebenden Offenstellung zu verstellen ist, in welcher das Fahrzeugdach in einem hinter dem Fahrzeuginnenraum gelegenen Verdeckkasten versenkt ist. Der Verdeckkasten ist von einem Verdeckkastendeckel, welcher zugleich den Kofferraumdeckel bildet, zu verschließen, wobei der Verdeckkastendeckel zum Freigeben des Verdeckkastens um eine dem Heck des Fahrzeugs benachbarte Schwenkachse aufzuschwenken ist.

In einem Bereich zwischen dem Verdeckkasten und den Fahrzeugsitzen ist eine verstellbare Abdeckeinheit angeordnet, die aus drei zusammenhängenden, zusammenfaltbaren Teilen besteht und zwischen einer horizontalen Abdeckposition und einer zusammengefalteten Öffnungsposition zu verstellen ist. Der Abdeckeinheit sind seitliche Abdeckteile zugeordnet, welche relativ zu den mittleren Abdeckteilen verschwenkt werden können und in zurückverschwenkter Position einen seitlichen Durchtritt für die C-Säulen des verstellbaren Fahrzeugdaches in Schließposition freigeben. In geöffneter Position ist dieser Durchtritt von den seitlichen Abdeckteilen verschlossen, so dass eine einheitliche etwa ebene Ablagefläche gegeben ist. Die Verstellung der Abdeckeinheit zwischen ebener Ablageposition und zusammengefalteter Lage erfolgt mittels eines separaten Stellgliedes.

Die aus mehreren Abdeckteilen bestehende Abdeckeinheit kann in ausgezogener Lage als vom Innenraum des geschlossenen Fahrzeugdaches aus zugängliche Hutablage genutzt werden. Darüber hinaus sind keine Verwendungsmöglichkeiten bekannt.

Aus der Druckschrift DE 199 28 213 C1 ist eine Schlitzantenne für Kraftfahrzeuge bekannt, die ein elektrisch leitendes Metallband umfasst, das um einen Tragkörper geführt ist, welcher aus Kunststoff als dielektrischem Werkstoff besteht. Gemäß einer in dieser Druckschrift beschriebenen Ausführung ist vorgesehen, dass die Antenne in der Mitte einer Hutablage des Fahrzeuges angeordnet ist. Hutablage und Antenne sind jedoch als separate Bauteile ausgeführt und die Antenne ist nicht in die Hutablage integriert, vielmehr ist die Hutablage lediglich der Träger der Antenne. Dies bedeutet einen zusätzlichen Montageaufwand und weist auch aus designtechnischer Sicht Nachteile auf.

Der Erfindung liegt das Problem zugrunde, zusätzliche Verwendungsmöglichkeiten für eine Platte in einem Kraftfahrzeug anzugeben. Die Platte soll außerdem stabil ausgeführt sein.

Dieses Problem wird erfindungsgemäß mit den Merkmalen des Anspruches 1 gelöst. Die Unteransprüche geben zweckmäßige Weiterbildungen an.

Die erfindungsgemäße Platte weist einen metallischen Tragkörper auf, der sich zumindest teilweise über die Fläche der Platte erstreckt, gegebenenfalls auch die gesamte Platte ausfüllt, wobei der Tragkörper bzw. die Platte als ganzes gegenüber sämtlichen angrenzenden Bauteilen elektrisch isoliert ist. Dies eröffnet die Möglichkeit, die Platte als Antenne zum Empfang elektromagnetischer Strahlung einzusetzen, welche einem Fahrzeugradio zuzuführen ist. Auf Grund der Isolierung der Platte gegenüber angrenzenden Bauteilen, insbesondere gegenüber an der Platte angreifenden Kinematiken oder Kinematikbestandteilen wie Gelenken, werden Störungen der Antennenfunktion vermieden. Die Platte eignet sich hierbei insbesondere zum Empfang von elektromagnetischen Wellen im Mittelwellenbereich.

Die Verstärkung mit dem metallischen Tragkörper bietet außerdem den Vorteil einer stabilen und belastungsfähigen Ausführung bei zugleich geringem Gewicht. Insbesondere in der Ausführung als Magnesium-Druckgussteil können die Vorteile von Stabilität bei geringem Eigengewicht und optimalem Radiowellenempfang vereint werden.

Für den Fall, dass der metallische Tragkörper die Platte nur teilweise ausfüllt, kann der Tragkörper innerhalb der Platte elektrisch isoliert sein, also gegenüber angrenzenden, noch der Platte zuzurechnenden Abschnitten isoliert sein, die nicht mit dem metallischen Tragkörper ausgefüllt sind. In diesem Fall übernimmt der vom Tragkörper ausgefüllte Plattenabschnitt die Antennenfunktion Es ist aber auch möglich, die Isolierung im Bereich der Plattenumrandung vorzunehmen, unabhängig davon, ob elektrisch leitfähige Abschnitte zwischen Tragkörper und Plattenrand angeordnet sind.

Die Platte ist zweckmäßig direkt, gegebenenfalls auch indirekt mit der Fahrzeugkarosserie verbunden und kann gegebenenfalls als eine Öffnung im Fahrzeug verschließender Deckel ausgeführt sein, beispielsweise als Verdeckkastendeckel, als Heck- bzw. Kofferraumdeckel, als Schiebedach oder als Dachschale eines Hardtops; in diesen Fällen bildet die Platte einen Teil der Außenfläche des Fahrzeugs. Als weitere Möglichkeit kommt auch eine Verwendung als Hutablage in Betracht, die sich im Fahrzeuginnenraum befindet, wobei die Hutablage aufgrund ihrer Position in unmittelbarer Nähe zur Heckscheibe praktisch ungehindert elektromagnetische Wellen empfangen kann. Im Falle eines verstellbaren, öffnungsfähigen Fahrzeugdaches befindet sich die Hutablage bei geöffnetem Dach ohnehin außen.

Im Falle einer Hutablage bildet diese eine Abdeckeinheit, welche in dem Freiraum zwischen dem vorderen Randbereich des Verdeckkastendeckels und der Trennwand zwischen dem Fahrzeuginnenraum und dem Verdeckkasten angeordnet ist, und ist zwischen einer Abdecklage, in der die Abdeckeinheit im Wesentlichen horizontal angeordnet ist und die den Endpositionen des Fahrzeugdaches - Schließposition sowie abgesenkte Position - zugeordnet ist, und einer geöffneten Position zu verstellen, in welcher der Freiraum freigegeben ist, um bei der Überführung des Fahrzeugdaches zwischen Schließposition und abgesenkter Position einen ausreichend großen Bewegungsraum bereitzustellen. Die Abdeckeinheit weist einen metallischen Tragkörper auf und besteht insbesondere aus Magnesium, ist beispielsweise als Magnesium-Druckgussteil ausgeführt, welcher sowohl gegenüber einem Stellantrieb zur Verstellung der Abdeckeinheit als auch gegenüber einem Gelenk bzw. mehreren Gelenken, über die die Abdeckeinheit mit einem weiteren Fahrzeugbauteil bzw. Dachbauteil gekoppelt ist, elektrisch isoliert ist. Auf Grund der Isolierung der Abdeckeinheit gegenüber dem die Abdeckeinheit betätigenden Stellantrieb sowie gegenüber dem mindestens einen Gelenk, über welches die Abdeckeinheit mit einem Fahrzeugbauteil schwenkbar gekoppelt ist, werden Störungen der Antennenfunktion vermieden. Die Abdeckeinheit eignet sich hierbei insbesondere zum Empfang von elektromagnetischen Wellen im Mittelwellenbereich.

Die Ausführung der Abdeckeinheit als metallischer Tragkörper bzw. die Verstärkung mit einem metallischen Tragkörper bietet außerdem den Vorteil einer stabilen und belastungsfähigen Ausführung bei zugleich geringem Gewicht. Insbesondere in der Ausführung als Magnesium-Druckgussteil können die Vorteile von Stabilität bei geringem Eigengewicht und optimalem Radiowellenempfang vereint werden.

In einer vorteilhaften Ausführung ist die Abdeckeinheit zweiteilig ausgebildet mit einem vorderen und einem hinteren Abdeckteil, wobei das hintere Abdeckteil über Gelenke an das vordere Abdeckteil angekoppelt ist, welches wiederum schwenkbar mit einem Fahrzeugbauteil verbunden ist. Der Stellantrieb zur Betätigung des hinteren Abdeckteiles ist über das vordere Abdeckteil geführt und ist gegenüber diesem elektrisch isoliert, um eine Masseverbindung zur Fahrzeugkarosserie über den Stellantrieb zu vermeiden. Der Stellantrieb ist insbesondere als kinematische Zwangsführung in Abhängigkeit der Stellbewegung des Fahrzeugdaches ausgeführt, um ohne zusätzliche Antriebseinheit das hintere Abdeckelement in eine einen Durchtritt öffnende Freigabestellung zu überführen, in welcher das Fahrzeugdach aus dem Verdeckkasten herausgehoben bzw. in diesen versenkt werden kann. Bevorzugt ist hierbei lediglich das vordere, dem Fahrzeuginnenraum zugewandte Abdeckteil als metallischer Tragkörper ausgeführt und elektrisch gegenüber den weiteren Fahrzeugbauteilen und auch gegenüber dem hinteren Abdeckteil isoliert und wird als Antenne herangezogen. Auf diese Weise kann eine bessere elektrische Isolierung des vorderen Abdeckteiles gegenüber dem Verdeckkastendeckel erreicht werden.

Die Isolierung zwischen vorderem und hinterem Abdeckteil kann durch eine Blende, die insbesondere aus Kunststoff besteht, unterstützt werden. Die Blende überdeckt außerdem in Schließlage der Abdeckeinheit den Spalt zwischen vorderem und hinterem Abdeckteil und übernimmt dadurch auch eine optische Funktion. Auch im Seitenbereich der Abdeckeinheit kann ein Spaltabdeckteil aus elektrisch isolierendem Material an der Abdeckeinheit gehalten sein, das in der Schließstellung der Abdeckeinheit den Spalt zu angrenzenden Fahrzeugkarosserieteilen abdeckt und insbesondere aus einem flexiblen Material, beispielsweise aus Gummi besteht, wodurch eine größere Ausgleichsfähigkeit des Spaltabdeckteiles insbesondere bei einer Relativbewegung zwischen vorderem und hinterem Abdeckteil gegeben ist.

Zur Übertragung der elektromagnetischen Strahlung von der Abdeckeinheit zu einem die Strahlung verarbeitenden elektronischen Bauteil des Radius ist ein mit dem metallischen Tragkörper der Abdeckeinheit verbundenes Übertragungskabel vorgesehen, welches zweckmäßig an dem Stellantrieb gehalten und geführt ist, über das die Abdeckeinheit, insbesondere das hintere Abdeckteil, zu verstellen ist. Der Stellantrieb kann als Zug-Druck-Kabel ausgeführt sein, an welchem das Übertragungskabel gehalten ist, das jedoch gegenüber dem Zug-Druck-Kabel elektrisch isoliert ist.

Der metallische Tragkörper kann sowohl plattenförmig ausgebildet sein, wobei diese Ausführung sich durch eine besonders hohe Stabilität auszeichnet, als auch beispielsweise gitterförmig ausgeführt sein. Gegebenenfalls kommt auch eine Verstärkung oder Verbindung mit einem nichtmetallischen Teil, beispielsweise mit einem Kunststoffträgerteil, in Betracht.

Weitere Vorteile und zweckmäßige beispfelhafte Ausführungen sind den weiteren Ansprüchen, der Figurenbeschreibung und den Zeichnungen zu entnehmen. Es zeigen:
- Fig. 1: eine Seitenansicht auf ein verstellbares Fahrzeugdach in Schließposition, mit einem heckseitigen Verdeckkasten zur Aufnahme des Fahrzeugdaches in Öffnungsstellung, wobei ein Kofferraumdeckel als Verdeckkastendeckel sowie eine zweiteilige Abdeckeinheit als Hutablage dargestellt sind,
- Fig. 2: eine Ansicht von unten auf die zweiteilige Abdeckeinheit,
- Fig. 3: eine Darstellung gemäß Schnittlinie III-III aus Fig. 2,
- Fig. 4: eine Darstellung gemäß Schnittlinie IV-IV aus Fig. 2,
- Fig. 5: eine Darstellung gemäß Schnittlinie V-V aus Fig. 2,
- Fig. 6: eine Darstellung gemäß Schnittlinie VI-VI aus Fig. 2.

In den folgenden Figuren sind gleiche Bauteile mit gleichen Bezugszeichen versehen.

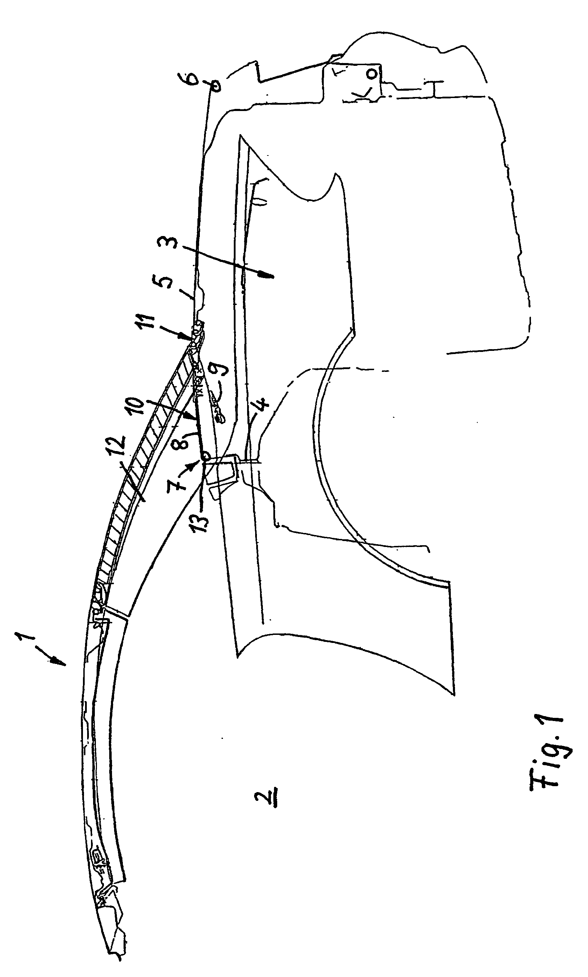

Das in Fig. 1 dargestellte verstellbare Fahrzeugdach 1 eines Cabriofahrzeuges ist zwischen der gezeigten Schließstellung, in der ein Fahrzeuginnenraum 2 überdeckt ist, und einer Offenstellung, in der das Fahrzeugdach 1 in einem heckseitigen Verdeckkasten 3 versenkt ist, zu verstellen. Bei dem verstellbaren Fahrzeugdach 1 handelt es sich um ein Hardtop mit zwei, gegebenenfalls auch drei zusammenhängenden, in sich starren Dachteilen, die in Offen- bzw. Ablagestellung im Verdeckkasten 3 übereinander liegend verstaut werden. Alternativ kann es sich bei dem Fahrzeugdach 1 auch um ein Softtop mit einem Verdeckgestänge und einem von dem Verdeckgestänge gehaltenen Verdeck-Bezugstoff handeln.

Der Verdeckkasten 3 befindet sich im Heckbereich des Fahrzeuges und schließt sich heckseitig an den Fahrzeuginnenraum 2 an, welcher über eine Trennwand 4 vom Heckbereich separiert ist. Der Verdeckkasten 3 ist von einem Verdeckkastendeckel 5 zu verschließen, der zugleich einen Kofferraumdeckel bildet und um eine hintere, heckseitige Schwenkachse 6 aus der in Fig. 1 gezeigten Schließ- bzw. Abdeckposition in eine den Verdeckkasten öffnende Öffnungsposition zu verschwenken ist. Gegebenenfalls kann der Verdeckkastendeckel 5 auch um eine zweite, dem Fahrzeuginnenraum benachbarte Schwenkachse zu öffnen sein, um den Kofferraum vom Heck des Fahrzeuges aus zugänglich zu machen.

Des Weiteren ist eine als Hutablage fungierende, verstellbare Abdeckeinheit 7 in einem Freiraum 10 zwischen dem vorderen Randbereich des Verdeckkastendeckels 5 und dem Fahrzeuginnenraum 2, insbesondere der Trennwand 4, vorgesehen. Die Abdeckeinheit 7 ist zweiteilig mit einem vorderen, dem Fahrzeuginnenraum benachbarten Abdeckteil 8 und einem hinteren Abdeckteil 9 ausgeführt, wobei das hintere Abdeckteil 9 schwenkbar mit dem vorderen Abdeckteil 8 verbunden ist und in der in Fig. 1 gezeigten Schließstellung des Fahrzeugdaches in eine Position unterhalb des vorderen Abdeckteiles verschwenkt ist, wodurch ein Durchtritt 11 im Freiraum 10 freigegeben ist, durch den sich ein Hauptlenker 12 hindurch erstrecken kann, welcher Bestandteil der Dachkinematik des Fahrzeugdaches ist. Der Durchtritt 11 befindet sich zwischen dem vorderen Rand des Verdeckkastendeckels 5 und dem vorderen Abdeckteil 8. Das vordere Abdeckteil 8 ist zweckmäßig mit einem Dachteil schwenkbar verbunden, insbesondere mit dem Hauptlenker 12, und kann aus der dargestellten, etwa horizontalen Abdecklage in eine aufgeschwenkte Öffnungslage überführt werden, um den Durchtritt 11 für die Überführung des Fahrzeugdaches zwischen Schließ- und Offenposition zu vergrößern. Das Gelenk, über das das vordere Abdeckteil 8 schwenkbar mit einem Fahrzeug- bzw. Dachbauteil gekoppelt ist, ist mit Bezugszeichen 13 versehen und liegt auf der dem Fahrzeuginnenraum 2 zugewandten Seite im vorderen Randbereich des Abdeckteiles 8.

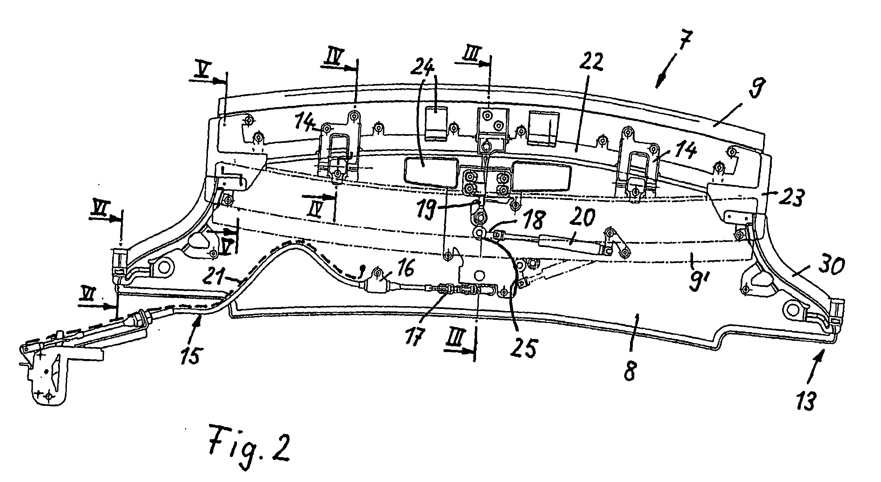

Im Folgenden wird auf die Fig. 2 bis 5 Bezug genommen. Das hintere Abdeckteil 9 ist über zwei Gelenke 14 um eine Querachse quer zur Fahrzeuglängsachse schwenkbar mit dem vorderen Abdeckteil 8 gekoppelt und aus der in Fig. 2 mit durchgezogenem Strich dargestellten, ausgeklappten Abdecklage in die mit strichpunktierter Linie dargestellte Freigabeposition zu verschwenken, in welcher der Durchtritt für das tragende Dachbauteil zum Verdeckkasten hin freigegeben ist und das hintere Abdeckteil - in dieser Position gekennzeichnet mit Bezugszeichen 9' - sich in einer Position unterhalb des vorderen Abdeckteiles 8 befindet.

Zur Überführung des hinteren Abdeckteiles 9 zwischen seiner Abdecklage, in der vorderes und hinteres Abdeckteil 8 bzw. 9 in einer gemeinsamen, etwa horizontalen Ebene liegen, und der den Durchtritt freigebenden Freigabeposition ist ein Stellantrieb 15 vorgesehen, welcher im Ausführungsbeispiel ein Zug-Druck-Kabel umfasst und insbesondere über die Dachkinematik kinematisch zwangsgeführt ist, um eine Zwangssteuerung der Relativbewegung des hinteren Abdeckteiles 9 gegenüber dem vorderen Abdeckteil 8 in Abhängigkeit von der Fahrzeugdachposition zu erreichen. Das Zug-Druck-Kabel des Stellantriebes 15 ist am vorderen Abdeckteil 8 über Halterungen 16 und 17 befestigt. Eine Stellbewegung des Zug-Druck-Kabels des Stellantriebes 15 wird über einen Umlenkhebel 18 sowie eine Koppelstange 19 in eine Schwenkbewegung des hinteren Abdeckteiles 9 relativ zum vorderen Abdeckteil 8 umgesetzt. Über ein Federelement 20, beispielsweise eine Gasdruckfeder, ist die gesamte Stellkinematik in Richtung der ausgeklappten Position des hinteren Abdeckteiles 9 kraftbeaufschlagt.

Das vordere Abdeckteil 8 ist metallisch ausgeführt, insbesondere als Magnesium-Druckguss-Bauteil, und gegenüber allen angrenzenden Bauteilen elektrisch isoliert, insbesondere gegenüber dem hinteren Abdeckteil 9 sowie den karosserieseitigen Bauteilen bzw. den Dachbauteilen, an denen das vordere Abdeckteil 8 gehalten ist. Die metallische Ausführung und die elektrische Isolierung gegenüber angrenzenden Bauteilen eröffnet die Möglichkeit, das vordere Abdeckteil 8 als Antenne für ein Autoradio zu verwenden. Die vom Abdeckteil empfangene elektromagnetische Strahlung wird über ein Übertragungskabel 21 vom Abdeckteil 8 zum Autoradio übertragen. Das Übertragungskabel 21 ist zweckmäßig an dem als Zug-Druck-Kabel ausgeführten Stellantrieb 15 gehalten und geführt, jedoch gegenüber diesem elektrisch isoliert. Auch die Halterungen 16 und 17, über die das Zug-Druck-Kabel am vorderen Abdeckteil 8 befestigt ist, sind elektrisch isolierend ausgeführt, ebenso wie die Gelenke 14 zwischen vorderem und hinterem Abdeckteil 8 bzw. 9, die insbesondere elektrisch isolierende Buchsen aufweisen, durch die die Achse des jeweiligen Gelenkes geführt ist; gleiches gilt auch für die nur andeutungsweise gezeigten Gelenke 13, über die das vordere Abdeckteil 8 schwenkbar an einem Fahrzeug bzw. Dachbauteil gehalten ist.

Zwischen vorderem und hinterem Abdeckteil 8 bzw. 9 befindet sich eine Kunststoffblende 22, welche in Abdecklage der Abdeckeinheit den Spalt zwischen den Abdeckteilen 8 und 9 verschließt, so dass eine durchgehende, ununterbrochene Ablagefläche gebildet ist. Die Blende 22 erstreckt sich bis in den Seitenbereich des hinteren Abdeckteiles 9. Die Blende 22 kann auch eine elektrisch isolierende Funktion übernehmen.

Im Seitenbereich im Übergang zwischen vorderem und hinterem Abdeckteil 8 bzw. 9 ist ein Spaltabdeckteil 23 vorgesehen, welches aus einem flexiblen und elektrisch isolierenden Material, insbesondere aus Gummi besteht. Das Spaltabdeckteil überbrückt zum Teil sowohl im Seitenbereich den Spalt zwischen vorderem und hinterem Abdeckteil 8 bzw. 9 als auch den Spalt zwischen dem hinteren Abdeckteil 9 und seitlich hieran angrenzenden Bauteilen des Fahrzeuges. Desweiteren ist eine seitliche Blende 30 im Seitenbereich des vorderen Abdeckteils 8 zur Spaltüberbrückung zu angrenzenden Bauteilen angeordnet.

Benachbart zur Längsmittelachse befinden sich jeweils zwei Puffer 24 sowohl auf der Unterseite des vorderen Abdeckteiles 8 als auch auf der Unterseite des hinteren Abdeckteiles 9, welche in Abdecklage der Abdeckeinheit für den Fall einer hohen, auf die Abdeckeinheit von oben wirkenden Belastung für eine Abstützung gegenüber dem im Verdeckkasten versenkten Fahrzeugdach sorgen sollen. Die Puffer sind zweckmäßig ebenfalls aus einem elektrisch isolierenden Material gefertigt.

Der Stellantriebskinematik zur Übertragung der Stellbewegung vom Stellantrieb 15 auf das hintere Abdeckteil 9 ist eine Führungsbahn 25 zugeordnet, welche unmittelbar auf der Unterseite des vorderen Abdeckteiles 8 gehalten ist und etwa teilkreisförmig ausgeführt ist, wobei in der Führungsbahn 25 der Umlenkhebel 28 der Stellkinematik geführt ist. Die Führungsbahn 25 besteht insbesondere aus Kunststoff und sorgt für eine verringerte Reibung bei der Bewegung des Umlenkhebels 18 entlang der Teilkreisbahn bei der Verstellung des hinteren Abdeckteiles 9 zwischen eingeklappter und ausgeklappter Position. Die Führungsbahn 25 kann gegebenenfalls auch als Kulisse ausgebildet sein.

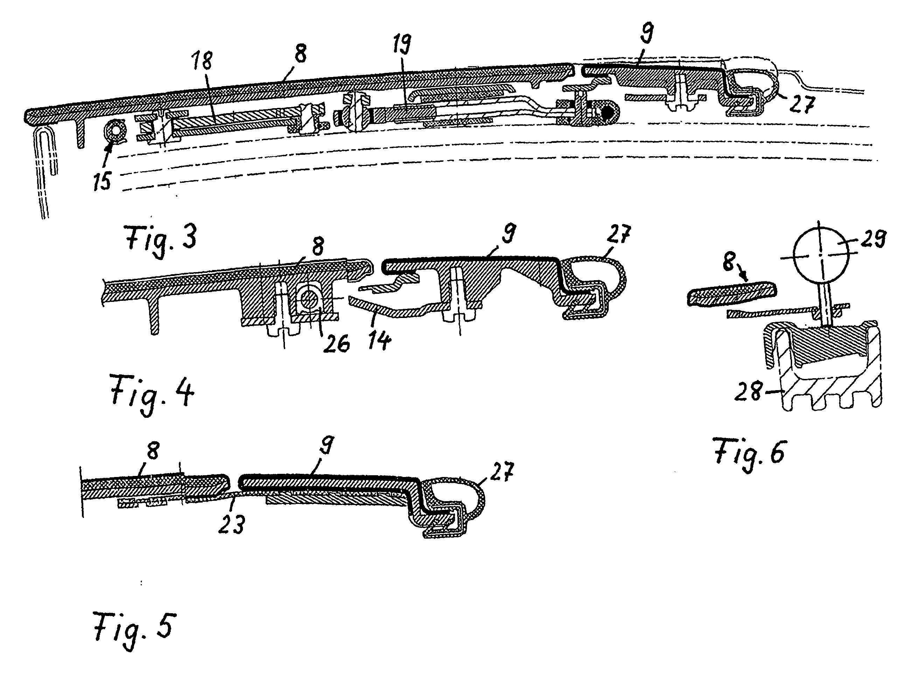

Wie den Fig. 3 bis 5 zusätzlich zu entnehmen, befindet sich-am hinteren Randbereich des hinteren Abdeckteiles 9 auf der in Abdecklage dem Verdeckkastendeckel zugewandten Seite ein Dichtungselement 27, welches sich über die Breite des hinteren Abdeckteiles erstreckt und in Abdecklage der Abdeckeinheit den Spalt zum Verdeckkastendeckel verschließt.

Fig. 6 zeigt eine als Montagehilfe genutzte Fixierschraube 29 auf einer Leiste 28 des vorderen Abdeckteiles 8. Die Fixierschraube 29 wird in die Leiste 28 auf der Unterseite der Abdeckeinheit befestigt. Bei der Montage der Abdeckeinheit wird ein Kugelkopf der Fixierschraube in eine korrespondierende Ausnehmung im aufnehmenden Fahrzeugbauteil eingesetzt, wodurch automatisch die richtige Position der Abdeckeinheit in Fahrzeuglängsrichtung erreicht wird, in welcher die Abdeckeinheit an dem betreffenden Fahrzeugbauteil befestigt werden kann.

## Patentansprüche

1. Platte (5; 7) in einem Kraftfahrzeug, die zumindest abschnittsweise einen metallischen Tragkörper (8) aufweist und die an mindestens ein weiteres Bauteil (12) des Kraftfahrzeugs beweglich angekoppelt ist,
**dadurch gekennzeichnet,**
**dass** der metallische Tragkörper (8) gegenüber den angrenzenden Bauteilen (9, 12) elektrisch isoliert ist.

2. Platte nach Anspruch 1,
**dadurch gekennzeichnet,**
**dass** die Platte (5; 7) über ein Gelenk als Bestandteil einer Kinematik mit einem angrenzenden Bauteil gekoppelt ist.

3. Platte nach Anspruch 1 oder 2,
**dadurch gekennzeichnet,**
**dass** an der Platte (5; 7) ein Stellantrieb angreift, der gegenüber dem metallischen Tragkörper elektrisch isoliert ist.

4. Platte nach einem der Ansprüche 1 bis 3,
**dadurch gekennzeichnet,**
**dass** die Platte als Verdeckkastendeckel (5) ausgeführt ist, der zwischen einer einen Verdeckkasten (3) zur Aufnahme eines verstellbaren Fahrzeugdaches verschließenden Abdecklage und einer Öffnungslage zur Freigabe des Verdeckkastens (3) zu verstellen ist.

5. Platte nach einem der Ansprüche 1 bis 3,
**dadurch gekennzeichnet,**
**dass** die Platte als verstellbare Abdeckeinheit (7) ausgeführt ist, mit der ein Freiraum (10) zwischen einem vorderen Randbereich eines Verdeckkastendeckels (5) zum Verschließen eines Verdeckkastens (3) und dem Fahrzeuginnenraum (2) abzudecken ist, wobei die Abdeckeinheit (7) über mindestens ein Gelenk (13) schwenkbar mit einem Fahrzeugbauteil gekoppelt und zumindest ein Teil der Abdeckeinheit (7) über einen Stellantrieb (15) zu verstellen ist.

6. Platte nach Anspruch 5,
**dadurch gekennzeichnet,**
**dass** die Abdeckeinheit (7) über Gelenke (13) schwenkbar an einem verstellbaren Kinematikgestänge des Fahrzeugdaches (1) angelenkt ist.

7. Platte nach Anspruch 5 oder 6,
**dadurch gekennzeichnet,**
**dass** die Abdeckeinheit (7) ein dem Fahrzeuginnenraum (2) zugewandtes vorderes Abdeckteil (8) und ein dem Fahrzeugheck benachbartes hinteres Abdeckteil (9) umfasst, das über Gelenke (14) schwenkbar mit dem vorderen Abdeckteil (8) gekoppelt ist.

8. Platte nach Anspruch 7,
**dadurch gekennzeichnet,**
**dass** der Stellantrieb (15) am vorderen Abdeckteil (8) befestigt ist und bei einer Betätigung des Stellantriebs (15) das hintere Abdeckteil (9) gegenüber dem vorderen Abdeckteil (8) verschwenkt wird.

9. Platte nach Anspruch 7 oder 8,
**dadurch gekennzeichnet,**
**dass** das vordere Abdeckteil (8) den metallischen Tragkörper bildet und gegenüber dem hinteren Abdeckteil (9) elektrisch isoliert ist.

10. Platte nach einem der Ansprüche 7 bis 9,
**dadurch gekennzeichnet,**
**dass** zwischen vorderem und hinterem Abdeckteil (8, 9) eine Blende (22) angeordnet ist, die insbesondere aus Kunststoff besteht.

11. Platte nach einem der Ansprüche 5 bis 10,
**dadurch gekennzeichnet,**
**dass** am Stellantrieb (15) ein mit dem metallischen Tragkörper verbundenes Übertragungskabel (21) geführt ist, welches gegenüber dem Stellantrieb (15) elektrisch isoliert ist.

12. Platte nach einem der Ansprüche 5 bis 11,
**dadurch gekennzeichnet,**
**dass** der Stellantrieb (15) ein Zug-Druck-Kabel ist, welches über eine Kunststoffhalterung (16, 17) an der Abdeckeinheit (7) gehalten ist.

13. Platte nach einem der Ansprüche 5 bis 12,
**dadurch gekennzeichnet,**
**dass** im Seitenbereich der Abdeckeinheit (7) ein flexibles, elektrisch isolierendes Spaltabdeckteil (23) an der Abdeckeinheit gehalten ist, das insbesondere aus Gummi besteht.

14. Platte nach einem der Ansprüche 1 bis 13,
**dadurch gekennzeichnet,**
**dass** die Platte aus Magnesium besteht und insbesondere als Magnesium-Druckgussteil ausgeführt ist.

## Claims

1. Plate (5; 7) in a motor vehicle, which has at least in portions a metal support body (8) and which is coupled movably to at least one further structural part (12) of the motor vehicle, **characterized in that** the metal support body (8) is electrically insulated in relation to the adjacent structural parts (9, 12).

2. Plate according to Claim 1, **characterized in that** the plate (5; 7) is coupled to an adjacent structural part via a joint as a component of a kinematic arrangement.

3. Plate according to Claim 1 or 2, **characterized in that** an actuator, which is electrically insulated in relation to the metal support body, acts on the plate (5; 7).

4. Plate according to one of Claims 1 to 3, **characterized in that** the plate is embodied as a roof-box lid (5) which is adjustable between a covering position closing a roof box (3) for receiving an adjustable vehicle roof and an opening position for opening the roof box (3).

5. Plate according to one of Claims 1 to 3, **characterized in that** the plate is embodied as an adjustable covering unit (7), with which a free space (10) between a front edge region of a roof-box lid (5) for closing a roof box (3) and the vehicle interior (2) can be covered, the covering unit (7) being coupled pivotably to a vehicle structural part via at least one joint (13), and at least a part of the covering unit (7) being adjustable via an actuator (15).

6. Plate according to Claim 5, **characterized in that** the covering unit (7) is articulated pivotably on an adjustable kinematic linkage of the vehicle roof (1) via joints (13).

7. Plate according to Claim 5 or 6, **characterized in that** the covering unit (7) comprises a front covering part (8) facing the vehicle interior (2) and a rear covering part (9) adjacent to the vehicle rear, which rear covering part is coupled pivotably to the front covering part (8) via joints (14).

8. Plate according to Claim 7, **characterized in that** the actuator (15) is fastened to the front covering part (8) and, when the actuator (15) is operated, the rear covering part (9) is pivoted in relation to the front covering part (8).

9. Plate according to Claim 7 or 8, **characterized in that** the front covering part (8) forms the metal support body and is electrically insulated in relation to the rear covering part (9).

10. Plate according to one of Claims 7 to 9, **characterized in that** a screen (22), made in particular of plastic, is arranged between the front and the rear covering part (8, 9).

11. Plate according to one of Claims 5 to 10, **characterized in that** a transmission cable (21), which is connected to the metal support body and is electrically insulated in relation to the actuator (15), is guided on the actuator (15).

12. Plate according to one of Claims 5 to 11, **characterized in that** the actuator (15) is a push-pull cable which is retained on the covering unit (7) via a plastic holding device (16, 17).

13. Plate according to one of Claims 5 to 12, **characterized in that**, in the side region of the covering unit (7), a flexible, electrically insulating gap-covering part (23), made in particular of rubber, is held on the covering unit.

14. Plate according to one of Claims 1 to 13, **characterized in that** the plate is made of magnesium and is in particular embodied as a magnesium diecast part.

## Revendications

1. Plaque (5 ; 7) pour véhicule à moteur, qui présente au moins par sections un corps support métallique (8) et qui est couplée de manière mobile à au moins une autre composante (12) du véhicule à moteur, **caractérisée en ce que** le corps support métallique (8) est isolé au niveau électrique par rapport aux composantes adjacentes (9, 12).

2. Plaque selon la revendication 1, **caractérisée en ce que** la plaque (5 ; 7) est couplée, par le biais d'une articulation faisant office de composante d'une cinématique, à une composante adjacente.

3. Plaque selon la revendication 1 ou 2, **caractérisée en ce que** sur la plaque (5 ; 7) s'engrène une propulsion de réglage qui est isolée au niveau électrique par rapport au corps support métallique.

4. Plaque selon l'une quelconque des revendications 1 à 3, **caractérisée en ce que** la plaque est réalisée sous forme d'un couvercle de caisson de masquage (5) qui est réglable entre une position de recouvrement permettant de fermer un caisson de masquage (3) destiné à recevoir un toit de véhicule réglable et une position d'ouverture permettant de libérer le caisson de masquage (3).

5. Plaque selon l'une quelconque des revendications 1 à 3, **caractérisée en ce que** la plaque est réalisée sous forme d'une unité de recouvrement réglable (7), qui permet de recouvrir un espace libre (10) entre une zone périphérique avant d'un couvercle de caisson de masquage (5) pour fermer un caisson de masquage (3) et l'habitacle du véhicule (2), l'unité de recouvrement (7) étant couplée de manière pivotable à une composante du véhicule par le biais d'au moins une articulation (13) et au moins une partie de l'unité de recouvrement (7) se réglant à l'aide d'une propulsion de réglage (15).

6. Plaque selon la revendication 5, **caractérisée en ce que** l'unité de recouvrement (7) est articulée par le biais d'articulations (13) de manière pivotable sur une tige à cinématique réglable du toit du véhicule (1).

7. Plaque selon la revendication 5 ou 6, **caractérisée en ce que** l'unité de recouvrement (7) comprend une pièce de recouvrement avant (8) tournée vers l'habitacle du véhicule (2) et une pièce de recouvrement arrière (9) voisine de l'arrière du véhicule qui est couplée par le biais d'articulations (14) de manière pivotable à la pièce de recouvrement avant (8).

8. Plaque selon la revendication 7, **caractérisée en ce que** la propulsion de réglage (15) est fixée à la pièce de recouvrement avant (8) et que la pièce de recouvrement arrière (9) pivote par rapport à la pièce de recouvrement avant (8) en cas d'actionnement de la propulsion de réglage (15).

9. Plaque selon la revendication 7 ou 8, **caractérisée en ce que** la pièce de recouvrement avant (8) constitue le corps support métallique et est isolée au niveau électrique par rapport à la pièce de recouvrement arrière (9).

10. Plaque selon l'une quelconque des revendications 7 à 9, **caractérisée en ce qu'**est disposé, entre les pièces de recouvrement avant et arrière (8, 9), un écran (22) qui est composé notamment de matière plastique.

11. Plaque selon l'une quelconque des revendications 5 à 10, **caractérisée en ce que**, sur la propulsion de réglage (15), est guidé un câble de transmission (21) relié au corps support métallique qui est isolé au niveau électrique par rapport à la propulsion de réglage (15).

12. Plaque selon l'une quelconque des revendications 5 à 11, **caractérisée en ce que** la propulsion de réglage (15) est un câble de traction-pression qui est maintenu sur l'unité de recouvrement (7) à l'aide d'un support en matière plastique (16, 17).

13. Plaque selon l'une quelconque des revendications 5 à 12, **caractérisée en ce que**, dans la zone latérale de l'unité de recouvrement (7), une pièce de recouvrement de fente (23) flexible et isolante au niveau électrique, qui est composée notamment de caoutchouc, est maintenue sur l'unité de recouvrement.

14. Plaque selon l'une quelconque des revendications 1 à 13, **caractérisée en ce que** la plaque est composée de magnésium et est réalisée notamment sous forme de pièce de fonte sous pression en magnésium.
